# EUROPÄISCHE PATENTSCHRIFT

(11) **EP 0 648 164 B1**
(45) Veröffentlichungstag und Bekanntmachung des Hinweises auf die Patenterteilung: **23.07.1997**
(21) Anmeldenummer: 94914337.4
(22) Anmeldetag: 06.05.1994
(51) Int. Cl.: B60B 3/14

(54) **SYSTEM ZUR ZENTRALEN BEFESTIGUNG EINES RADES AN EINEM FAHRZEUG**
SYSTEM FOR CENTRALLY SECURING A WHEEL ON A VEHICLE
SYSTEME DE FIXATION CENTRALE D'UNE ROUE SUR UN VEHICULE

(30) Priorität: 07.05.1993 DE 4315765
(43) Veröffentlichungstag der Anmeldung: 19.04.1995
(73) Patentinhaber: PAGACZ, Zbigniew L., 83661 Lenggries (DE)
(72) Erfinder: PAGACZ, Zbigniew L., 83661 Lenggries (DE)
(74) Vertreter: Staudt, Hans-Peter, Dipl.-Ing.
(86) Internationale Anmeldenummer: DE9400535
(87) Internationale Veröffentlichungsnummer: WO9426539

(56) Entgegenhaltungen:
- CH-A- 316 313
- DE-U- 9 307 180
- FR-A- 468 545
- FR-A- 1 041 203
- US-A- 1 442 944
- US-A- 5 211 448

## Beschreibung

Die Erfindung betrifft ein System zur zentralen Befestigung eines Rades an einem Fahrzeug nach dem Oberbegriff des Anspruchs 1.

Es ist bekannt, Räder über eine Zentralbefestigung mit der Achse eines Fahrzeuges zu verbinden. Ein derartiger Verschluß zur Befestigung wird vorwiegend im Motorsport verwendet. Bisher bekannte Zentralverschlüsse sowie Verschlüsse von Speichenrädern sind mit Unsicherheitsmerkmalen behaftet, so daß ihre Verwendung in üblichen Straßenfahrzeugen selten ist.

Ein System zur zentralen Befestigung eines Rades an einem mit der Bremstrommel oder der Bremsscheibe des Fahrzeuges verschraubten Adapterflansch ist aus der DE 40 23 912 A1 bekannt. Das Rad wird dabei mit einer inneren zylindrischen Bohrung auf einen ebenfalls zylindrischen zentralen Flanschteil mit einem entsprechenden Durchmesser aufgesetzt und über eine Schraubverbindung verspannt. Die Schraubverbindung weist eine äußere Kegelfläche auf, die an einer entsprechend schräg ausgeformten inneren Bohrung des Rades zum Anschlag kommt.

Es hat sich gezeigt, daß diese Art der Schraubverbindung gegenüber dynamischen großen Belastungen auf das Rad nicht ausreichend stabil ist.

Aus der US 14 65 958 ist es bekannt, zwischen Rad und Nabe einen Kegelring mittels einer zentralen Sicherheitsmutter zur reibschlüssigen Befestigung eines Rades an der Nabe einzuklemmen. Die Innenkontur dieses bekannten Kegelrings ist zylindrisch ausgeformt. Hierdurch wird die Demontage des Kegelrings erschwert, insbesondere dann, wenn die äußere Abschrägung dieses Kegelrings einen kleinen Kegelwinkel aufweist.

Der Erfindung liegt daher die Aufgabe zugrunde, ein System zur zentralen Befestigung eines Rades an der Achse eines Fahrzeuges anzugeben, dessen Montage einfach ist und eine hohe Sicherheit gegen Lösen der Befestigungsverbindung gewährleistet.

Diese Aufgabe wird durch die im Anspruch 1 angegebene Erfindung gelöst. Vorteilhafte Weiterbildungen der Erfindung sind in Unteransprüchen angegeben.

Gemäß der Erfindung ist zwischen Rad und einem zentralen Flanschteil der Achse ein Doppelkegelring, der auf seiner Außenseite und seiner Innenseite eine schräg zu seiner Mittelachse verlaufende Fläche aufweist, mittels einer zentralen Sicherheitsschraube oder Sicherheitsmutter zur reibschlüssigen Befestigung des Rades an dem Flansch einklemmbar. Die Schraubverbindung zur Befestigung des Rades dient dabei ausschließlich zur Erzeugung der axialen Andruckkraft des Doppelkegelrings, während die Klemmung des Rades gegenüber dem zentralen Flanschteil über den unabhängigen Doppelkegelring erfolgt, so daß Belastungen des Doppelkegelringes sich nicht unmittelbar auf die Schraubverbindung auswirken könne.

Zwischen Achse und Rad kann ein Adapterflansch vorgesehen sein.

Vorzugsweise weist die Sicherheitsschraube einen äußeren Kragen auf, über den entweder eine unmittelbare Klemmung des Doppelkegelrings erfolgen kann oder in einer alternativen Ausführungsform eine Druckscheibe gegen den Doppelkegelring andrückbar ist. Die Druckscheibe weist den Vorteil auf, daß die Kragenausbildung der Sicherheitsschraube mit kleinerem Durchmesser ausgeführt werden kann. Die Druckscheibe kann außerdem eine Ausnehmung aufweisen, so daß der Kragen der Sicherheitsschraube auf einem Absatz der Druckscheibe aufliegt, wodurch eine versenkte Anordnung der Sicherheitsschraube in der Druckscheibe möglich ist.

Um eine leichte Klemmung des Doppelkegelrings zwischen Rad und zentralem Flanschteil zu ermöglichen, ist der Doppelkegelring vorzugsweise radial geschlitzt.

Der Adapterflansch weist vorzugsweise eine zentrale Bohrung mit einem Gewinde zum Einschrauben der Sicherheitsschraube auf, wobei der Adapterflansch mit der Bremsscheibe oder Bremstrommel verschraubbar sein kann.

Insbesondere ist vorgesehen, daß die Sicherheitsschraube eine kopfferne Ausnehmung aufweist, die über einen über einen Teilumfang verlaufenden radialen Spalt verfügt, bei dem durch mechanisches Zusammendrücken dieses Spaltes ein Steigungssprung des Gewindes bewirkt ist. Beim Einschrauben der Sicherheitsschraube in das zentrale Schraubgewinde des Adapterflansches verformt sich dieses Gewinde wiederum elastisch zu seiner Ausgangsstellung, wodurch eine Selbsthemmung der Schraube hervorgerufen wird.

Die Verwendung eines Adapterflansches hat den Vorteil, daß eine einzige Ausführungsform eines Rades an unterschiedlichen Fahrzeugen zur Anwendung kommen kann, sofern dort ein entsprechend angepaßter Flansch verwendet ist, dessen fahrzeugseitige Anschlüsse jeweils an das Fahrzeug angepaßt sind.

Die Erfindung wird nachstehend anhand eines Ausführungsbeispiels näher erläutert. Es zeigen:
- Fig. 1: eine Schnittansicht durch ein Befestigungssystem eines Rades,
- Fig. 2: eine Schnittansicht mit einer alternativen Ausführungsform der Sicherheitsschraube,
- Fig. 3: eine Schnittansicht durch einen Adapterflansch für ein Befestigungssystem nach Fig. 1,
- Fig. 4: eine Schnittansicht einer Sicherheitsschraube,
- Fig. 5: ein Schnittansicht durch ein Rad (Radscheibe),
- Fig. 6: ein Befestigungssystem mit einer Sicherheitsmutter.

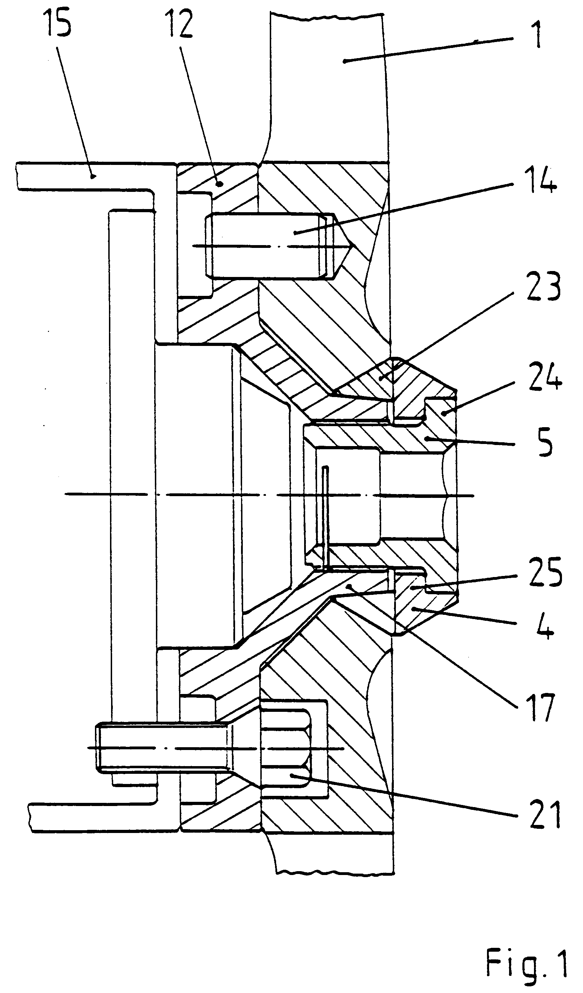

Fig. 1 zeigt eine Ausführungsform eines Systems zur zentralen Befestigung eines Rades 1. An der Bremstrommel 15 ist ein Adapterflansch 12 mittels Schrauben 21 axial befestigt. Auf einen zentralen Bereich des Adapterflansches 12, im folgenden zentrales Flanschteil 17 genannt, ist das Rad 1 aufgesetzt. Das Rad 1 ist gegenüber dem Flansch 12 drehbar, wobei die Befestigung mittels des Zentralverschlusses allein ausreichen würde, eine drehsichere Befestigung zu erreichen. Vorsorglich ist zusätzlich zwischen Flansch 12 und Rad 1 ein Bolzen 14 zum drehsicheren Befestigen vorgesehen.

Nachdem das Rad 1 auf das zentrale Flanschteil 17 aufgesetzt ist, wird ein Doppelkegelring 23 in den Spalt zwischen Rad 1 und zentralem Flanschteil 17 eingesetzt. Der Doppelkegelring 23 kann auch beweglich in einer Ausnehmung des Rades vormontiert sein. Das Rad 1 weist in Radialrichtung keinen Anschlag gegenüber dem Flansch 12 jedoch auch gegenüber dem Flansch zentriert sein. Die Verklemmung des Rades 1 gegenüber dem Flanschteil 17 erfolgt daher allein durch Eindrücken des Doppelkegelrings 23 mittels einer Sicherheitsschraube 5 über eine Druckscheibe 4. Hierzu ist vorgesehen, daß das zentrale Flanschteil 17 ein Innengewinde aufweist, in das die mit einem Außengewinde versehene Sicherheitsschraube 5 eingeschraubt wird. Ein Kragen 24 der Sicherheitsschraube 5 drückt dabei auf die Druckscheibe 4 und damit mittelbar auf den Doppelkegelring 23. Es ist dargestellt, daß der Kragen 24 der Sicherheitsschraube 5 sich in einer Ausnehmung der Druckscheibe 4 befindet, so daß der Druck des Kragens 24 der Sicherheitsschraube 5 erst auf einen Ansatz 25 der Druckscheibe 4 und dann auf den Doppelkegelring 23 erfolgt. Damit kann erreicht werden, daß die Sicherheitsschraube 5 bündig in der Druckscheibe 4 eingelassen ist. Bei einer entsprechenden Ausformung der Druckscheibe 4 kann damit eine kantenfreie äußere Form des zentralen Bereichs der Befestigung des Rades erreicht werden.

Der Doppelkegelring 23 ist vorzugsweise radial geschlitzt ausgeführt, wodurch ein leichtes Verspannen zwischen Rad 1 und zentralem Flanschteil 17 erfolgen kann.

Durch die kegelige Ausformung des zentralen Flanschteils 17 kann man eine leichte Demontage des Rades vom Adapterflansch 12, auch bei kleinen Kegelwinkeln der Abschrägung 8, erreichen.

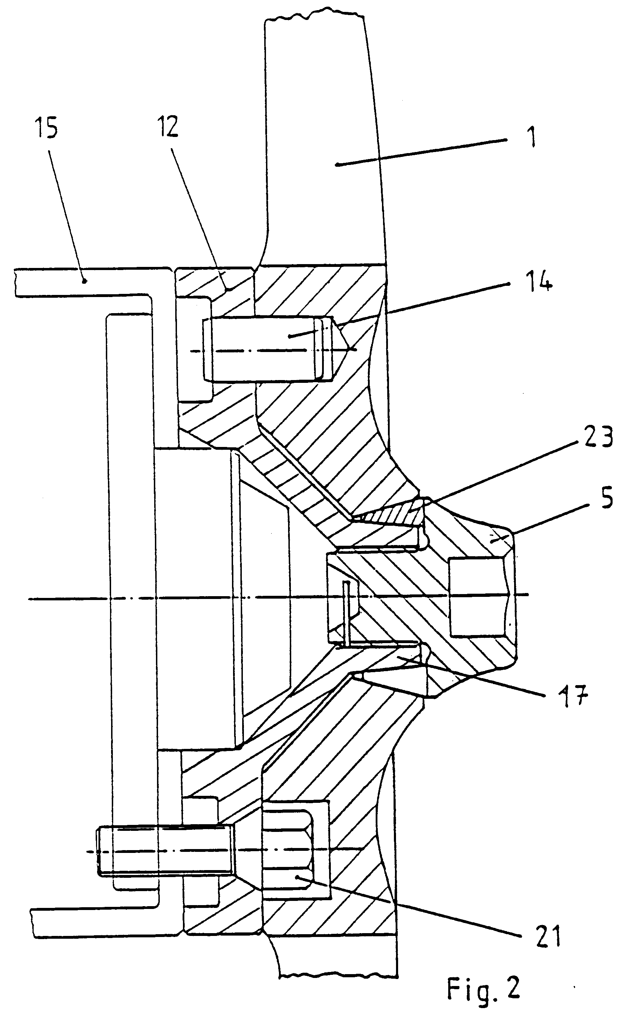

Wie in Fig. 2 dargestellt, kann die Sicherheitsschraube 5 mit ihrem Ansatz unmittelbar auf dem Doppelkegelring 23 aufliegen, ohne daß eine Andruckscheibe verwendet wäre.

Durch die Vorspannkraft der Sicherheitsschraube 5 wird über den Doppelkegelring 23 auf den kegeligen zentralen Abschnitt 17 des Adapterflansches 12 eine radiale Kraft aufgebracht, durch die in Umfangsrichtung zwischen Doppelkegelring und zentralem Flanschteil 17 einerseits und zwischen Doppelkegelring und Rad 1 andererseits eine reibschlüssige Verbindung hergestellt wird. Diese Reibkraft ist wesentlich größer als die auftretenden dynamischen Betriebskräfte am Rad. Die Schraubverbindung der Sicherheitsschraube wird daher nicht mit den dynamischen Betriebskräften beansprucht und dient allein als Drehmomentwandler zur Erzeugung der Reib-Haltekräfte.

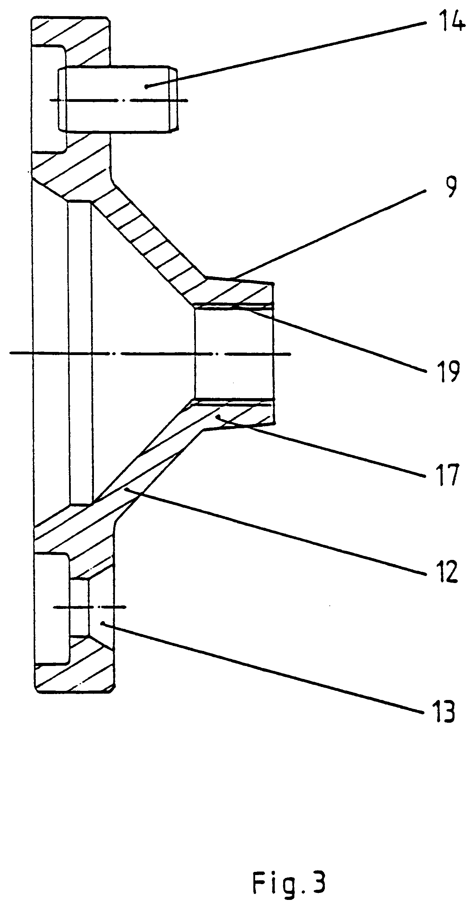

Fig. 3 zeigt einen Flansch zur Befestigung des Rades in Schnittansicht mit einem kegeligen zentralen Flanschteil 17. Der Flansch wird über mehrere Bohrungen 13 auf die Bremsscheibe oder Bremstrommel 15 eines Fahrzeuges aufgesetzt und mit Hilfe von Schrauben 21 oder Muttern verschraubt. Es ist ferner ein Mitnehmerbolzen 14 dargestellt, der in eine entsprechende Ausnehmung 6 des Rades eingreifen kann, um die durch die zentrale Befestigung bedingte Verdrehmöglichkeit zwischen Flansch 12 und Rad 1 völlig auszuschließen.

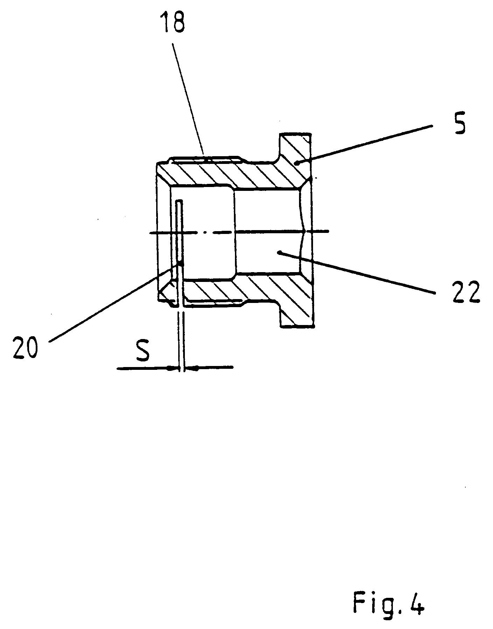

Fig. 4 zeigt die Ausführungsform einer Sicherheitsschraube in Schnittansicht. Die Sicherheitsschraube 5 ist als Hohlschraube mit einem äußeren Gewinde 18 ausgebildet, das in das Flanschgewinde 19 einschraubbar ist. Die Schraube 5 weist einen radialen über einen Teilumfang der Schraube verlaufenden Spalt 20 auf. Dieser Spalt wird vor der Verwendung der Sicherheitsschraube 5 mechanisch zusammengedrückt, so daß sich im Bereich des Spaltes 20 ein Steigungssprung des Gewindes 18 ergibt. Der Spalt wird vorzugsweise dadurch hergestellt, daß die Schraube 5 im kopffernen Anfangsbereich des Gewindes bis in eine gewisse Tiefe eingesägt wird. Danach wird durch Hammerschlag der angesägte Bereich verformt. Beim Einschrauben der Sicherheitsschraube 5 in den Flansch 12 erfolgt eine elastische Rückstellung des Gewindes. Das Gewinde weist daher eine Selbsthemmung auf, die dazu führt, daß die Sicherheitsschraube sich nicht selbständig lösen kann.

Im vorderen Bereich weist die Sicherheitsschraube eine Innensechskant-Aufnahme 22 auf, mit der durch Einsatz eines passenden Schlüssels ein Anschrauben oder Lösen der Schraube möglich ist. Durch entsprechende Ausformung dieser Innensechskant-Aufnahme kann erreicht werden, das übliche genormte Schlüssel zum Lösen der Schrauben nicht verwendbar sind, wodurch sich eine gewisse Diebstahlsicherheit erreichen läßt.

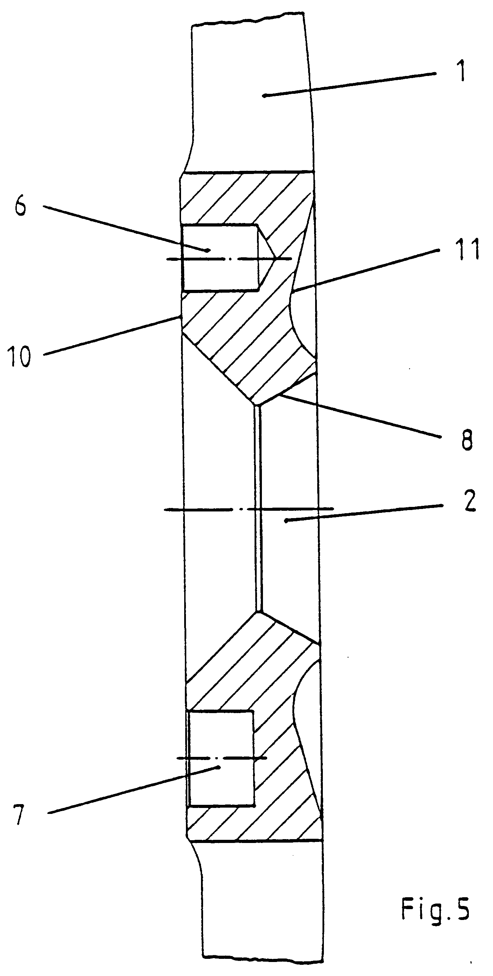

Fig. 5 zeigt eine Schnittansicht durch ein Rad (Radscheibe). In der zentralen Bohrung 2 dient allein die Abschrägung 8 der Befestigung mittels des Doppelkegelrings an dem Adapterflansch. Die axiale Lage des Rades 1 wird durch die Anschlagfläche 10, die gegen den Flansch 12 gerichtet ist, hergestellt. Die Bohrungen 6 dienen der Aufnahme eines Mitnehmerbolzens 14, während die Bohrung 7 für die Aufnahme der Schraubenbolzenköpfe zur Befestigung des Flansches an einer Bremsscheibe oder Bremstrommel dienen.

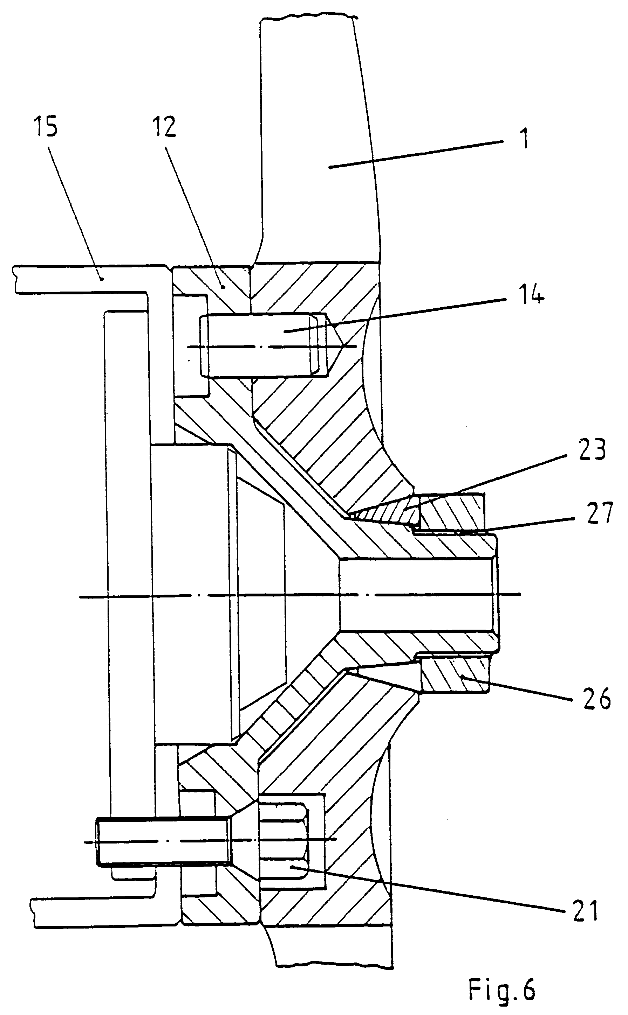

Fig. 6 zeigt eine alternative Ausführungsform der Erfindung. Anstelle einer Sicherheitsschraube wird dabei eine Sicherheitsmutter 26 verwendet, die auf eine zentrales Außengewinde 27 des Adapterflansches 12 aufgeschraubt wird. Die Sicherheitsmutter ist vorzugsweise selbsthemmend ausgeführt.

Die Erfindung ermöglicht eine einfache und sichere zentrale Befestigung eines Rades (Radscheibe) an der Achse eines Fahrzeuges.

### Bezugszeichenliste

- 1: Rad
- 2: Bohrung
- 4: Druckscheibe
- 5: Sicherheitsschraube
- 6: Bohrung
- 7: Bohrung
- 8: Abschrägung
- 9: Abschrägung
- 10: Anschlagfläche
- 11: Ausnehmung
- 12: Adapterflansch
- 13: Senkbohrung
- 14: Bolzen
- 15: Bremstrommel
- 17: zentrales Flanschteil
- 18: Gewinde
- 19: Gewinde
- 20: Spalt
- 21: Schraube
- 22: Innensechskant-Aufnahme
- 23: Doppelkegelring
- 24: Kragen
- 25: Ansatz
- 26: Sicherheitsmutter
- 27: Außengewinde

## Patentansprüche

1. System zur zentralen Befestigung eines Rades (1) mit einer zentralen Bohrung (2) an einer Achse eines Fahrzeuges,
dadurch gekennzeichnet,
daß zwischen Rad (1) und einem zentralen Flanschteil (17) der Achse ein Kegelring (23) mittels einer zentralen Sicherheitsschraube (5) oder Sicherheitsmutter (26) zur reibschlüssigen Befestigung des Rades (1) an der Achse einklemmbar ist und
daß der Kegelring (23) als Doppelkegelring ausgebildet ist, der auf seiner Außenseite und seiner Innenseite eine schräg zu seiner Mittelachse verlaufende Fläche aufweist, wobei die Innenbohrung des Rades (1) und die Außenkontur des zentralen Flanschteils (17) eine dem Doppelkegelring (23) entsprechende Abschrägung aufweisen.

2. System nach Anspruch 1, dadurch gekennzeichnet, daß zwischen Achse und Rad (1) ein Adapterflansch (12) vorgesehen ist.

3. System nach Anspruch 1 oder 2, dadurch gekennzeichnet, daß der Kegelring (23) mittels eines Kragens (24) der Sicherheitsschraube (5) zwischen Reifenfelge (1) und zentralem Flanschteil (17) eindrückbar ist.

4. System nach Anspruch 3, dadurch gekennzeichnet, daß zwischen dem Kragen (24) der Sicherheitsschraube (5) und dem Kegelring (23) eine Druckscheibe (4) vorgesehen ist.

5. System nach einem oder mehreren der vorhergehenden Ansprüche, dadurch gekennzeichnet, daß der Kegelring (23) radial geschlitzt ist.

6. System nach einem oder mehreren der vorhergehenden Ansprüche, dadurch gekennzeichnet, daß der Adapterflansch (12) eine zentrale Bohrung mit einem Innengewinde (19) zum Einschrauben der Sicherheitsschraube (5) zur Befestigung des Rades (1) aufweist, und daß der Adapterflansch (12) mit der Bremsscheibe oder Bremstrommel (15) des Fahrzeuges verschraubbar ist.

7. System nach einem oder mehreren der vorhergehenden Ansprüche, dadurch gekennzeichnet, daß die Sicherheitsschraube (5) eine kopfferne Ausnehmung aufweist und im Bereich der Ausnehmung einen über einen Teilumfang der Schraube verlaufenden radialen Spalt (20) aufweist, wobei durch mechanisches Zusammendrücken dieses Spaltes ein Steigungssprung des Schraubengewindes (18) bewirkt ist, und durch elastische Rückstellung der Gewindeverformung der Sicherheitsschraube (5) eine Selbsthemmung der Schraube (5) hervorgerufen wird.

8. System nach Anspruch 1, dadurch gekennzeichnet, daß der Flansch (17) ein Außengewinde (27) aufweist, und daß die Sicherheitsmutter eine selbsthemmende Mutter (26) ist, die auf das Außengewinde (27) zur Verklemmung des Kegelringes aufgeschraubt ist.

## Claims

1. A system for central fastening a wheel (1) having a central bore (2) to an axle of a vehicle,
characterized in that
a taper ring (23) is adapted to be clamped between said wheel (1) and a central flange portion (17) of said axle by a central safety bolt (5) or safety nut (26) in order to achieve a frictionally engaged fastening of said wheel (1) to said axle and
the taper ring (23) is formed as a double taper ring having on its outer side and on its inner side a surface which extend slantwise with respect to its center axis, wherein the central bore of said wheel (1) and the outer shape of said central flange portion (17) comprise a tapered section corresponding to said double taper ring (23).

2. The system as claimed in claim 1, characterized in that an adapter flange (12) is provided between said axle and said wheel (1).

3. The system as claimed in claims 1 or 2, characterized in that said taper ring is adapted to be pressed between said wheel (1) and said central flange portion (17) by a neck (24) of said safety bolt (5).

4. The system as claimed in claim 3, characterized in that a thrust plate (4) is provided between said neck (24) of said safety bolt (5) and said taper ring (23).

5. The system as claimed in one or a plurality of the preceding claims, characterized in that said taper ring (23) is radially slit.

6. The system as claimed in one or a plurality of the preceding claims, characterized in that said adapter flange (12) comprises a central bore having an internal thread (19) for receiving said safety bolt (5) in order to fasten said wheel (1) and said adapter flange (12) is adapted to be mounted by a threaded joint to a brake disc or brake drum (15) of said vehicle.

7. The system as claimed in one or a plurality of the preceding claims, characterized in that said safety bolt (5) comprises a recess distant from its head and a radial gap (20) extending over a portion of the circumference of said bolt in the region of said recess, wherein a discontinuity of the pitch of the thread (18) is effected by mechanically compressing said gap and a self-locking mechanism of said bolt (5) is effected by elastically redeforming said deformation of said safety bolt (5).

8. The system as claimed in claim 1 characterized in that said flange (17) comprises an external thread (27) and said safety nut is a self-locking nut (26) which is screwed onto said external thread (27) for clamping said taper ring.

## Revendications

1. Système de fixation centrale d'une roue (1) à un alésage central (2) d'un essieu ou arbre de roue d'un véhicule,
caractérisé en ce qu'entre la roue (1) et une partie centrale de flasque (17) de l'arbre de roue est susceptible d'être serrée par une vis de sécurité centrale (5) ou par un écrou de sécurité central (26), une bague conique (23), de manière à fixer la roue sur l'arbre de roue par friction, et en ce que la bague conique (23) est réalisée sous la forme d'une bague bi-conique qui comporte, sur sa face extérieure et sur sa face intérieure, une surface inclinée par rapport à son axe médian, l'alésage intérieur de la roue (1) et le contour extérieur de la partie centrale de flasque (17) présentant une surface inclinée correspondant à celle de la bague bi-conique (23).

2. Système selon la revendication 1, caractérisé en ce qu'il comporte, entre l'arbre de roue et la roue (1), un flasque d'adaptation (12).

3. Système selon la revendication 1 ou 2, caractérisé en ce que la bague conique (23) est susceptible d'être pressée à l'aide d'une collerette (24) de la vis de sécurité (5) entre la jante (1) du bandage pneumatique et la partie centrale de flasque (17).

4. Système selon la revendication 3, caractérisé en ce qu'il comporte, entre la collerette (24) de la vis de sécurité (5) et la bague conique (23), un disque de pressage (4).

5. Système selon l'une ou plusieurs des revendications précédentes, caractérisé en ce que la bague conique (23) est fendue radialement.

6. Système selon l'une ou plusieurs des revendications précédentes, caractérisé en ce que le flasque d'adaptation (12) comporte un alésage central muni d'un filetage intérieur (19) destiné au vissage de la vis de sécurité (5) pour la fixation de la roue (1) et en ce que le flasque d'adaptation (12) est susceptible d'être relié par vissage au disque ou au tambour de frein (15) du véhicule.

7. Système selon l'une ou plusieurs des revendications précédentes, caractérisé en ce que la vis de sécurité (5) comporte, à distance de sa tête, une cavité, et dans la zone de la cavité, une fente radiale (20) courant sur une partie de la périphérie de la vis, un décalage du pas du filetage (18) de la vis étant provoqué par compression mécanique de cette fente, de telle manière qu'on obtienne, par retour élastique en position de la déformation du filetage de la vis de sécurité (5), un autoblocage de la vis (5).

8. Système selon la revendication 1, caractérisé en ce que le flasque (27) comporte un filetage extérieur (17) et en ce que l'écrou de sécurité est un écrou autobloquant (26) qui est vissé sur le filetage extérieur (27) pour bloquer la bague conique.
